# FASCICULE DE BREVET EUROPEEN

(11) **EP 3 011 162 B1**
(45) Date de publication et mention de la délivrance du brevet: **09.08.2017**
(21) Numéro de dépôt: 14737289.0
(22) Date de dépôt: 20.06.2014
(51) Int. Cl.: F02K 1/76, F02K 1/62, F02K 1/72

(54) **DISPOSITIF DE COMMANDE POUR INVERSEUR DE POUSSÉE DE TURBORÉACTEUR, RÉALISANT UN BLOCAGE DE L'INVERSEUR**
STEUERUNGSVORRICHTUNG FÜR EINE TURBINENTRIEBWERK-SCHUBUMKEHRVORRICHTUNG MIT UMKEHRERBLOCKIERUNG
CONTROL DEVICE FOR A TURBOJET ENGINE THRUST REVERSER, BLOCKING THE REVERSER

(30) Priorité: 21.06.2013 FR 1355945
(43) Date de publication de la demande: 27.04.2016
(73) Titulaire: Safran Nacelles, 76700 Gonfreville-l'Orcher (FR)
(72) Inventeur: JORET, Jean-Philippe, F-27210 Beuzeville (FR); SOULIER, Pascal, F-76600 Le Havre (FR); TADDEI, Vincent, F-27210 Boulleville (FR)
(74) Mandataire: Gaillarde, Frédéric F. Ch.
(86) Numéro de dépôt international: PCT/FR2014/051548
(87) Numéro de publication internationale: WO 2014/202918

(56) Documents cités:
- EP-A1- 0 524 875
- WO-A2-01/57382
- US-A- 5 720 449
- US-A- 5 826 823

## Description

La présente invention concerne un dispositif de commande permettant de désactiver un inverseur de poussée d'une nacelle d'aéronef, ainsi qu'une nacelle d'aéronef équipée d'un tel dispositif de commande.

Les ensembles de motorisation pour les aéronefs comportent généralement une nacelle formant une enveloppe extérieure globalement circulaire, comprenant à l'intérieur un turboréacteur disposé suivant l'axe longitudinal de cette nacelle.

Le turboréacteur reçoit de l'air frais venant du côté amont ou avant, et rejette du côté aval ou arrière les gaz chauds issus de la combustion du carburant, qui donnent une certaine poussée. Pour les turboréacteurs à double flux, des aubes de soufflante disposées autour de ce turboréacteur génèrent un flux secondaire important d'air froid le long d'une veine annulaire passant entre le moteur et la nacelle, qui ajoute une poussée élevée.

Certaines nacelles comportent un système d'inversion de poussée qui ferme au moins en partie la veine annulaire d'air froid, et rejette le flux secondaire vers l'avant afin de générer une poussée de freinage de l'aéronef.

Un type d'inverseur de poussée connu, présenté notamment par le document FR-A1-2960918, comporte deux demi-parties mobiles formant des capots arrière, qui peuvent coulisser axialement vers l'arrière sous l'effet de vérins, en déployant des volets dans la veine annulaire afin de fermer au moins partiellement cette veine, et de renvoyer le flux d'air froid radialement vers l'extérieur en passant par des grilles découvertes lors de ce coulissement comprenant des aubes qui dirigent ce flux vers l'avant.

Un autre type d'inverseur de poussée connu, présenté notamment par le document WO-A1-2008/142243, comporte à l'arrière de la nacelle des portes actionnées par des vérins, qui basculent afin de fermer au moins partiellement la veine annulaire en déviant le flux froid radialement vers l'extérieur, ces portes dirigeant ensuite le flux vers l'avant pour générer la poussée de freinage. Un autre inverseur de poussée selon l'état de la technique est connu par le document WO01/57382. Par ailleurs pour des opérations de maintenance, ou pour rendre inactif l'inverseur de poussée en cas de panne par exemple, il est connu de disposer sur la nacelle une première commande manuelle agissant quand elle est mise en oeuvre, sur le système motorisé qui peut être hydraulique, électrique ou pneumatique, afin d'empêcher un déploiement de cet inverseur. Il est connu aussi de disposer dans le même but une deuxième commande manuelle de blocage agissant quand elle est mise en oeuvre de manière mécanique, comprenant par exemple un axe relié par une tige à la commande, qui s'introduit entre le rail et la glissière de guidage des parties mobiles d'un inverseur à grilles, afin d'empêcher un mouvement de ces parties.

Les deux commandes du système motorisé et mécanique sont indépendantes, un opérateur pouvant mettre en oeuvre l'une ou l'autre de ces commandes, ou les deux, pour empêcher le déploiement de l'inverseur.

Toutefois un problème qui peut se poser après l'actionnement des deux commandes de blocage, est que pour permettre le fonctionnement de l'inverseur de poussée, l'opérateur peut par inadvertance ne désengager que la première commande du système motorisé. Dans ce cas le maintien du blocage par la commande mécanique mise en oeuvre n'est pas détecté, et l'inverseur de poussée ne fonctionnera pas.

La présente invention a notamment pour but d'éviter ces inconvénients de la technique antérieure.

Elle propose à cet effet un dispositif de commande pour inverseur de poussée d'une nacelle de turboréacteur comprenant des parties mobiles motorisées par des actionneurs, qui se déploient pour inverser la poussée, ce dispositif comportant une première commande de blocage agissant sur le système motorisé ainsi qu'une deuxième commande de blocage agissant de manière mécanique sur les parties mobiles, qui empêchent quand elles sont mises en oeuvre un déploiement de ces parties mobiles, remarquable en ce qu'il comporte un moyen qui dans le cas de la mise en oeuvre de la commande mécanique, empêche le désengagement de la première commande.

Un avantage de ce dispositif de commande est qu'il permet de manière simple et efficace, avec des moyens comprenant un coût réduit, d'empêcher une erreur de manoeuvre en interdisant à l'opérateur de désengager la première commande tant que la commande mécanique n'est pas désengagée, ce qui évite de laisser partir l'aéronef avec un inverseur de poussée qui n'est pas opérationnel.

Le dispositif de commande selon l'invention peut comporter de plus une ou plusieurs des caractéristiques suivantes, qui peuvent être combinées entre elles.

Avantageusement, le moyen empêchant le désengagement bloque directement le mouvement d'un levier de manoeuvre de la première commande, afin de réaliser de manière simple cet empêchement.

Le levier de manoeuvre peut réaliser un pivotement, le moyen venant dans le plan de pivotement de ce levier.

En particulier, la commande mécanique de blocage peut comporter le serrage d'un embout d'une tige dans une forme correspondante. On utilise ainsi une commande de blocage mécanique existante.

Avantageusement, l'absence de l'embout dans la forme correspondante dégage un espace permettant à une patte de se déplacer, cette patte empêchant le désengagement de la première commande. Ce système mécanique est simple et efficace.

En particulier l'embout peut avoir une forme cylindrique serrée entre deux supports, la forme correspondante d'un de ces supports disposant d'une ouverture permettant à la patte de rentrer dedans quand cet embout est retiré.

Avantageusement, la patte se trouve à une extrémité d'une lame de blocage pivotante, l'autre extrémité de cette lame comprenant un moyen empêchant directement le mouvement du levier de manoeuvre de la première commande de blocage. On réalise ainsi directement par une seule pièce la relation entre la mise en oeuvre de la commande mécanique, et l'empêchement du désengagement de la première commande.

En complément, le dispositif de commande peut comporter un deuxième moyen qui empêche la mise en oeuvre de la commande mécanique avant la mise en oeuvre de la première commande. On impose ainsi un ordre dans les mises en oeuvre des deux commandes.

En particulier la première commande de blocage peut comporter un levier de manoeuvre comprenant un doigt constituant le deuxième moyen, qui vient en face d'un support mobile maintenant la commande mécanique désengagée.

L'invention a aussi pour objet une nacelle de turboréacteur comportant un inverseur de poussée disposant de parties mobiles motorisées par des actionneurs, qui se déploient pour inverser la poussée, et un dispositif de commande comprenant une première commande de blocage agissant sur le système motorisé ainsi qu'une deuxième commande de blocage agissant de manière mécanique sur les éléments mobiles, remarquable en ce que ce dispositif de commande comporte l'une quelconque des caractéristiques précédentes.

L'invention sera mieux comprise et d'autres caractéristiques et avantages apparaîtront plus clairement à la lecture de la description ci-après, donnée à titre d'exemple en référence aux dessins annexés dans lesquels :
- la figure 1 est une vue d'un demi-côté d'un inverseur de poussée à grille dans une position fermée ;
- la figure 2 est une vue de ce demi-coté dans une position déployée de l'inverseur ;
- les figures 3a et 3b sont des vues respectivement en perspective et de côté, d'un dispositif de commande selon l'invention comprenant les deux commandes désengagées ;
- les figures 4a et 4b sont des vues de ce dispositif comprenant la première commande de blocage mise en oeuvre ;
- les figures 5a et 5b sont des vues de ce dispositif comprenant la fixation de la commande mécanique ouverte ;
- les figures 6a et 6b sont des vues de ce dispositif comprenant la commande mécanique mise en oeuvre ;
- les figures 7a et 7b sont des vues de ce dispositif comprenant la fixation de la commande mécanique refermée, cette commande mécanique restant mise en oeuvre ;
- les figures 8a et 8b sont des vues du dispositif de commande comprenant la première commande de blocage désengagée et la commande mécanique mise en oeuvre ;
- les figures 9a et 9b sont des vues d'un dispositif de commande selon une variante, comprenant les deux commandes désengagées ;
- les figures 10a et 10b sont des vues de ce dispositif comprenant la première commande de blocage mise en oeuvre ; et
- les figures 11 a et 11 b sont des vues de ce dispositif comprenant la première commande de blocage et la commande mécanique mises en oeuvre.

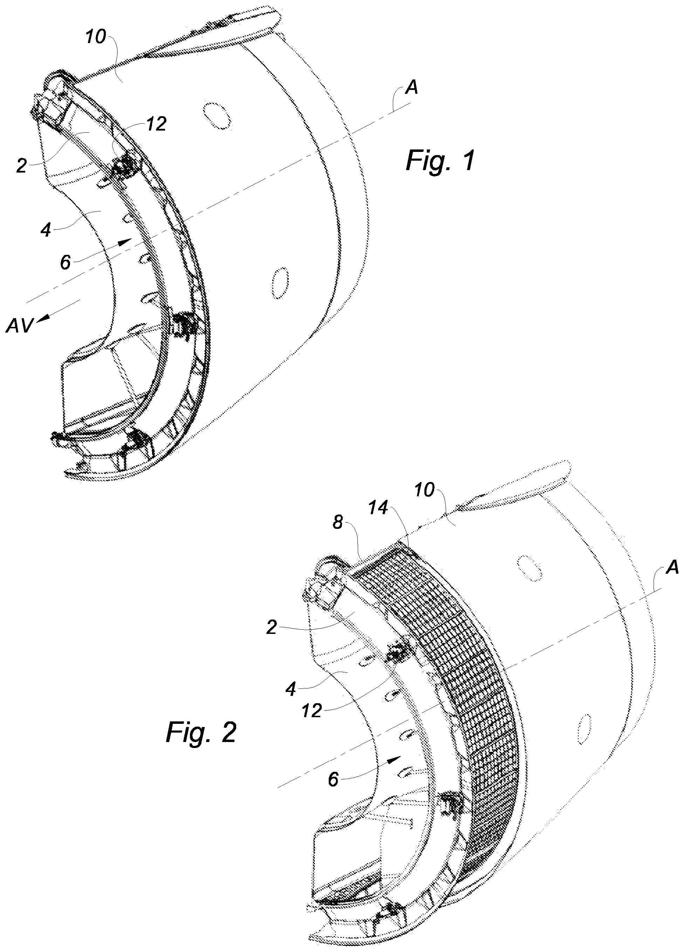

Les figures 1 et 2 présentent la partie arrière d'une nacelle de turboréacteur centrée sur un axe principal A, comprenant un cadre avant 2 fixé sur la structure se trouvant en avant qui n'est pas représentée. La veine annulaire secondaire 6 se trouve entre la paroi intérieure de la partie arrière, et la structure interne fixe 4.

La partie arrière de la nacelle est recouverte par deux capots mobiles 10, formant chacun dans un plan de coupe transversal un demi-cercle. Chaque capot 10 est guidé axialement par des rails de guidage longitudinaux 8, qui permettent un coulissement vers l'arrière sous l'effet de vérins 12 qui peuvent être électriques, hydrauliques ou pneumatiques, dont l'extrémité avant est fixée sur le cadre avant 2.

En coulissant vers l'arrière, chaque capot 10 déploie des volets dans la veine annulaire 6 afin de fermer en partie ce passage, et de renvoyer le flux d'air radialement vers l'extérieur en passant par des grilles de déviation 14 qui guident ce flux d'air vers l'avant pour freiner l'aéronef.

Pour assurer la sécurité lors d'opérations de maintenance, ou pour empêcher le fonctionnement de l'inverseur de poussée dans le cas d'une défaillance par exemple, la nacelle comporte un dispositif de commande bloquant l'inverseur de poussée, qui comprend une première commande manuelle agissant sur le système motorisé d'actionnement des capots 10, et une deuxième commande agissant de manière mécanique directement sur le guidage de ces capots, afin d'empêcher le recul des capots vers l'arrière.

En particulier, on peut disposer un axe en acier qui se loge entre un rail de guidage 8 et la glissière correspondante du capot 10, pour empêcher ce capot de coulisser vers l'arrière.

Les figures suivantes 3 à 7 présentent un dispositif de commande manoeuvré par un opérateur dans cinq positions successives, comprenant une première commande et une commande mécanique de blocage d'un inverseur de poussée.

Le dispositif de commande comporte un boîtier 20 maintenu à plat par une tôle 22 disposée sur le côté de ce boîtier appelé côté arrière, indiqué par une flèche notée « AR », sur un élément fixe de la structure de la nacelle, en un endroit facilement accessible par un opérateur.

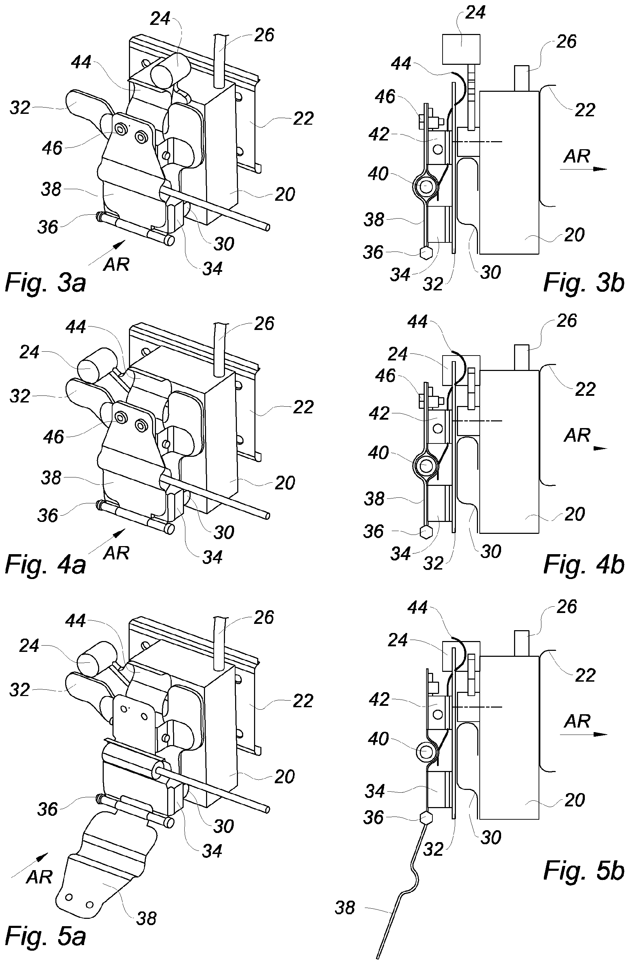

Un levier de première commande 24 disposé devant le boîtier 20, comprenant une poignée de manoeuvre cylindrique dépassant au dessus de ce boîtier, bascule suivant un axe horizontal perpendiculaire au boîtier pour mettre en oeuvre cette commande, comme le présentent les figures 4 à 7, pour commander par une liaison 26 un blocage du fonctionnement des vérins 12 déplaçant les capots 10.

Un élément de liaison en tôle 30 fixé sur la face avant du boîtier 20, en dessous du levier 24, forme une boucle qui reçoit une deuxième commande mécanique se trouvant en avant de ce levier.

Un support de marquage 32 fixé devant l'élément de liaison 30 forme une tôle plane parallèle à la face avant du boîtier, comprenant dans sa partie supérieure deux indications espacées latéralement, correspondant aux deux positions du levier 24 de la première commande de blocage.

Un support fixe 34 fixé dans la partie basse du support de marquage 32, est réalisé dans une tôle pliée comportant une partie supérieure formant un plan vertical qui remonte au-dessus de l'axe de pivotement du levier 24. La partie inférieure du support fixe 34 comprend une charnière disposant d'un axe horizontal 36, qui reçoit un support mobile 38 formé dans une tôle pouvant venir à plat sur ce support fixe.

Les deux supports fixe 34 et mobile 38 comportent chacun à un niveau intermédiaire, un creux formant un demi cylindre horizontal tourné l'un vers l'autre, de manière à former un espace cylindrique central pris entre les deux tôles, dont l'axe est parallèle à la charnière 36.

Les parties supérieures des deux supports fixe 34 et mobile 38 peuvent être serrées l'une sur l'autre par deux vis 46, afin de serrer dans l'espace cylindrique central un embout cylindrique 40 se trouvant à l'extrémité d'une tige reliée de manière mécanique au moyen de blocage empêchant le coulissement des parties immobiles de l'inverseur.

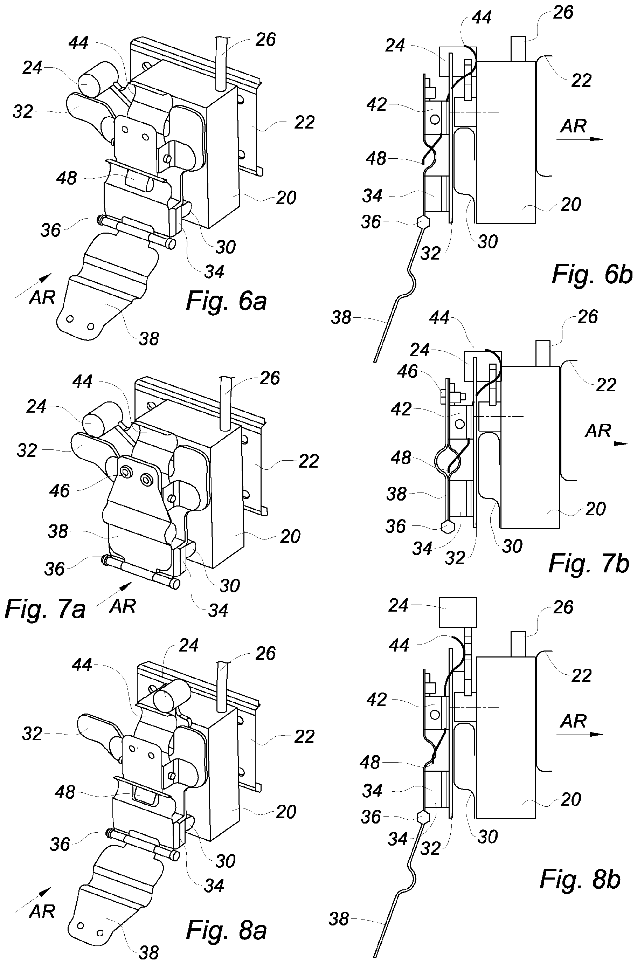

En retirant les deux vis 46 et en basculant vers l'avant le support mobile 38, comme le présentent les figures 5 et 6, on met en oeuvre la commande mécanique en libérant l'embout cylindrique 40 qui permet à sa tige de se déplacer, et de réaliser le blocage mécanique de l'inverseur.

Le support fixe 34 comporte dans une partie intermédiaire entre les vis de serrage 46 et le creux cylindrique recevant l'embout 40, un moyen de guidage d'une lame de blocage 44, qui permet un pivotement de cette lame suivant un axe horizontal situé dans le plan de ce support.

La lame de blocage 44 comporte une patte inférieure 48 s'ajustant dans une découpe centrale du creux cylindrique du support fixe 32, pour venir en appui sur l'embout 40 quand il est présent, comme le présentent les figures 3, 4 et 5. Dans cette position la lame de blocage 44 comporte à son extrémité supérieure une courbe qui se trouve suffisamment vers l'avant pour permettre un basculement libre du levier de commande 24 passant derrière, afin de le manoeuvrer pour mettre en oeuvre ou désengager la première commande.

Quand le support mobile 38 est détaché et que l'embout 40 est retiré, sous l'effet d'un ressort la patte inférieure 48 de la lame de blocage 44 se déplace vers l'avant par un pivotement de cette lame, en rentrant dans la découpe du creux cylindrique du support fixe 32. La courbe supérieure de la lame de blocage 44 se déplace vers l'arrière par son ressort, et vient en appui sur le levier 24 s'il se trouve en face de cette courbe, dans la position désengagée de la première commande.

Si la première commande de blocage est dans une position mise en oeuvre comme le présentent les figures 6 et 7, le levier 24 est décalé par rapport à la courbe supérieure de la lame de blocage 44. Par son ressort, la lame de blocage 44 bascule vers l'arrière en mettant sa courbe supérieure dans le plan du levier 24, ce levier ne peut plus revenir dans une position désengagée.

Les figures 3a et 3b présentent le dispositif de commande comprenant la première commande et la commande mécanique de blocage désengagées, le levier 24 est basculé vers la droite, et l'embout cylindrique 40 est maintenu entre les supports 34, 38. L'inverseur de poussée peut fonctionner librement.

Les figures 4a et 4b présentent le dispositif de commande comprenant la première commande de blocage mise en oeuvre, l'opérateur a basculé le levier 24 vers la gauche, il ne se trouve plus en face de la courbe supérieure de la lame de blocage 44. Cependant l'opérateur peut désengager librement cette première commande, en rebasculant le levier 24 vers la droite.

Les figures 5a et 5b présentent le dispositif de commande comprenant le support mobile 38 qui a été détaché du support fixe 34, l'opérateur ayant retiré les vis 46, puis basculé ce support mobile vers l'avant. Ensuite l'embout cylindrique 40 est sorti de son logement comme le présentent les figures 6a et 6b, la patte inférieure 48 de la lame de blocage 44 ayant pris la place de cet embout. La commande mécanique de blocage est mise en oeuvre.

On notera que l'opérateur ne peut pas désengager la première commande, le levier 24 de cette commande ne pouvant revenir vers la droite par la position de la courbe supérieure de la lame de blocage 44.

Les figures 7a et 7b présentent le dispositif de commande avec le support mobile 38 remis en position par l'opérateur, qui n'a pas positionné l'embout cylindrique 40 dans son logement. Dans ce cas la commande mécanique reste toujours mise en oeuvre. L'opérateur ne peut alors pas désengager la première commande de blocage.

On réalise ainsi de manière simple et efficace, pour tous types de système d'inversion de poussée, une sécurité qui tant que la commande mécanique de blocage reste mise en oeuvre, empêche le désengagement de la première commande. Dans ce cas l'opérateur ne peut pas par inadvertance demander une remise en fonctionnement de l'inverseur de poussée par un actionnement de la première commande, qui ne pourrait se réaliser à cause de la commande mécanique de blocage toujours mise en oeuvre.

Les figures 8a et 8b présente le dispositif de commande comprenant la première commande de blocage restée dans une position de désengagement, et la commande mécanique qui a été mise en oeuvre par l'opérateur réalisant une dépose du support mobile 38 et de l'embout cylindrique 40.

Dans ce cas l'opérateur peut désengager la commande de blocage mécanique en reposant l'embout cylindrique 40 et le support mobile 38, les deux commandes sont alors désengagées comme au départ.

L'opérateur peut aussi dans ce cas mettre en oeuvre la première commande de blocage en basculant le levier 24 vers la gauche, ce qui met alors le dispositif de commande dans la position présentée par les figures 6a et 6b. On se retrouve dans la position sécurisée où la première commande ne peut pas être désengagée sans un désengagement de la commande mécanique.

On a donc bien une mise en sécurité empêchant le désengagement de la première commande tant que la commande mécanique est mise en oeuvre, quel que soit l'ordre d'actionnement de l'une ou de l'autre des commandes.

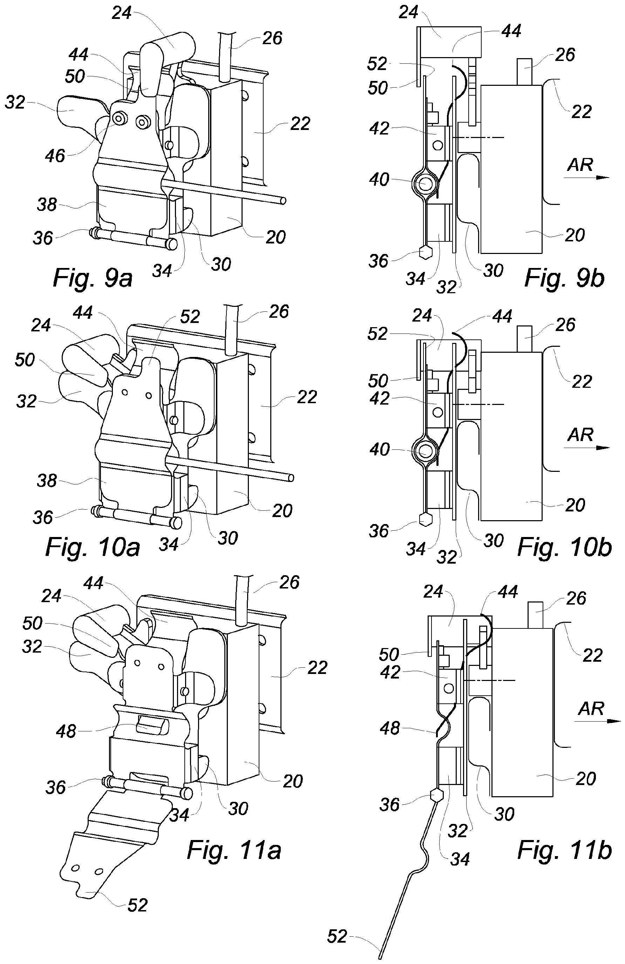

Les figures 9a et 9b présentent un dispositif de commande selon une variante, comportant une poignée cylindrique disposant sur sa face avant d'un doigt 50 tourné vers le bas, qui vient devant une patte correspondante 52 formée en haut du support mobile 38 quand la première commande de blocage est désengagée avec le levier 24 basculé vers la droite, et quand la commande mécanique de blocage est désengagée avec le support mobile serré sur le support fixe.

Dans cette position du levier 24 la commande mécanique ne peut pas être mise en oeuvre, le doigt 50 de ce levier marquant pour l'opérateur un empêchement d'ouverture du support mobile 38. On doit alors nécessairement d'abord mettre en oeuvre la première commande avant de pouvoir mettre en oeuvre la commande mécanique.

Les figures 10a et 10b présentent le dispositif de commande comprenant la mise en oeuvre de la première commande de blocage, le levier 24 étant basculé vers la gauche, son doigt 50 a alors dégagé la patte 52 du support mobile 38, ce qui permet d'accéder à ce support mobile 38.

Les figures 11a et 11b présentent le dispositif de commande comprenant le support mobile 38 qui a été librement ouvert pour sortir l'embout cylindrique 40, et mettre en oeuvre la commande mécanique de blocage. On réalise ainsi de manière simple, un dispositif de commande qui impose cet ordre de mise en oeuvre des commandes de blocage.

Le principe du dispositif de commande présenté ci-dessus, comprenant un moyen mécanique qui impose cet ordre de manoeuvre des commandes, peut être généralisé avec une première commande de blocage comprenant d'autres types de mouvements de la poignée, comme par exemple un mouvement de translation. Il peut aussi être généralisé avec une commande mécanique actionnant de manière variée, un ou plusieurs moyens de blocage des parties mobiles de l'inverseur de poussée qui peut être réalisé suivant les différents modèles connus.

## Revendications

1. Dispositif de commande pour inverseur de poussée d'une nacelle de turboréacteur comprenant des parties mobiles (10) motorisées par des actionneurs (12), qui se déploient pour inverser la poussée, ce dispositif comportant une première commande de blocage (24) agissant sur le système motorisé ainsi qu'une deuxième commande de blocage (40) agissant de manière mécanique sur les parties mobiles, qui empêchent quand elles sont mises en oeuvre un déploiement de ces parties mobiles (10), **caractérisé en ce qu'**il comporte un moyen (44) qui dans le cas de la mise en oeuvre de la commande mécanique (40), empêche le désengagement de la première commande.

2. Dispositif de commande pour inverseur selon la revendication 1, **caractérisé en ce que** le moyen empêchant le désengagement (44) bloque directement le mouvement d'un levier de manoeuvre (24) de la première commande.

3. Dispositif de commande pour inverseur selon la revendication 2, **caractérisé en ce que** le levier de manoeuvre (24) réalisant un pivotement, le moyen (44) vient dans le plan de pivotement de ce levier.

4. Dispositif de commande pour inverseur selon l'une quelconque des revendications précédentes, **caractérisé en ce que** la commande mécanique de blocage comporte le serrage d'un embout d'une tige (40) dans une forme correspondante.

5. Dispositif de commande pour inverseur selon la revendication 4, **caractérisé en ce que** l'absence de l'embout (40) de la forme correspondante, dégage un espace permettant à une patte (48) de se déplacer, cette patte empêchant le désengagement de la première commande.

6. Dispositif de commande pour inverseur selon la revendication 5, **caractérisé en ce que** l'embout (40) a une forme cylindrique serrée entre deux supports (34, 38), la forme d'un de ces supports (34) disposant d'une ouverture permettant à la patte (48) de rentrer dedans quand cet embout est retiré.

7. Dispositif de commande pour inverseur selon la revendication 5 ou 6, **caractérisé en ce que** la patte (48) se trouve à une extrémité d'une lame de blocage pivotante (44), l'autre extrémité de cette lame comprenant un moyen empêchant directement le mouvement du levier de manoeuvre (24) de la première commande de blocage.

8. Dispositif de commande pour inverseur selon l'une quelconque des revendications précédentes, **caractérisé en ce qu'**il comporte un deuxième moyen (50) qui empêche la mise en oeuvre de la commande mécanique (40) avant la mise en oeuvre de la première commande.

9. Dispositif de commande pour inverseur selon la revendication 8, **caractérisé en ce que** la première commande de blocage comporte un levier de manoeuvre (24) comprenant un doigt (50) constituant le deuxième moyen, qui vient en face d'un support mobile (38) maintenant la commande mécanique (40) désengagée.

10. Nacelle de turboréacteur comportant un inverseur de poussée disposant de parties mobiles (10) motorisées par des actionneurs (12), qui se déploient pour inverser la poussée, et un dispositif de commande comprenant une première commande de blocage (24) agissant sur le système motorisé ainsi qu'une deuxième commande de blocage (40) agissant de manière mécanique sur les éléments mobiles, **caractérisé en ce que** ce dispositif de commande est réalisé selon l'une quelconque des revendications précédentes.

## Patentansprüche

1. Steuervorrichtung für Schubumkehr einer Turbostrahltriebwerksgondel, umfassend bewegliche Teile (10), die durch Betätigungsvorrichtungen (12) motorisiert sind, die sich entfalten, um den Schub umzukehren, wobei diese Vorrichtung eine erste Sperrsteuerung (24) aufweist, die auf das motorisierte System wirkt, sowie eine zweite Sperrsteuerung (40), die auf mechanische Weise auf die beweglichen Teile wirkt, die, wenn sie durchgeführt sind, eine Entfaltung dieser beweglichen Teile (10) verhindern, **dadurch gekennzeichnet, dass** sie ein Mittel (44) aufweist, das im Fall einer Durchführung der mechanischen Steuerung (40) die Lösung der ersten Steuerung verhindert.

2. Steuervorrichtung für Umkehr nach Anspruch 1, **dadurch gekennzeichnet, dass** das Mittel, das die Lösung (44) verhindert, direkt die Bewegung eines Betätigungshebels (24) der ersten Steuerung blockiert.

3. Steuervorrichtung für Umkehr nach Anspruch 2, **dadurch gekennzeichnet, dass** der Betätigungshebel (24) ein Schwenken durchführt, wobei sich das Mittel (44) auf der Schwenkebene dieses Hebels befindet.

4. Steuervorrichtung für Umkehr nach einem beliebigen der vorhergehenden Ansprüche, **dadurch gekennzeichnet, dass** die mechanische Sperrsteuerung das Festspannen eines Ansatzstücks eines Schafts (40) in einer entsprechenden Form aufweist.

5. Steuervorrichtung für Umkehr nach Anspruch 4, **dadurch gekennzeichnet, dass** die Abwesenheit des Ansatzstücks (40) der entsprechenden Form einen Raum freigibt, der ermöglicht, dass sich eine Lasche (48) verschiebt, wobei diese Lasche die Lösung der ersten Steuerung verhindert.

6. Steuervorrichtung für Umkehr nach Anspruch 5, **dadurch gekennzeichnet, dass** das Ansatzstück (40) eine zylindrische Form aufweist, die zwischen zwei Trägern (34, 38) gespannt ist, wobei die Form eines dieser Träger (34) über eine Öffnung verfügt, die ermöglicht, dass die Lasche (48) wieder nach innen tritt, wenn dieses Ansatzstück zurückgezogen wird.

7. Steuervorrichtung für Umkehr nach Anspruch 5 oder 6, **dadurch gekennzeichnet, dass** sich die Lasche (48) an einem Ende eines schwenkenden Sperrblatts (44) befindet, wobei das andere Ende dieses Blatts ein Mittel umfasst, das direkt die Bewegung des Betätigungshebels (24) der ersten Sperrsteuerung verhindert.

8. Steuervorrichtung für Umkehr nach einem beliebigen der vorhergehenden Ansprüche, **dadurch gekennzeichnet, dass** sie ein zweites Mittel (50) aufweist, das die Durchführung der mechanischen Steuerung (40) vor der Durchführung der ersten Steuerung verhindert.

9. Steuervorrichtung für Umkehr nach Anspruch 8, **dadurch gekennzeichnet, dass** die erste Sperrsteuerung einen Betätigungshebel (24) aufweist, umfassend einen Finger (50), der das zweite Mittel darstellt, das sich gegenüber einem beweglichen Träger (38) befindet, der die mechanische Steuerung (40) gelöst hält.

10. Turbostrahltriebwerksgondel, aufweisend eine Schubumkehr, die über bewegliche Teile (10) verfügt, die durch Betätigungsvorrichtungen (12) motorisiert sind, die sich entfalten, um den Schub umzukehren, und eine Steuervorrichtung, umfassend eine erste Sperrsteuerung (24), die auf das motorisierte System wirkt, sowie eine zweite Sperrsteuerung (40), die auf mechanische Weise auf die beweglichen Teile wirkt, **dadurch gekennzeichnet, dass** diese Steuervorrichtung gemäß einem beliebigen der vorhergehenden Ansprüche durchgeführt ist.

## Claims

1. A control device for a thrust reverser of a turbojet engine nacelle comprising movable portions (10) motorized by actuators (12), which are deployed in order to reverse the thrust, this device including a first blocking control (24) acting on the motorized system as well as a second blocking control (40) mechanically acting on the movable portions, which prevent, when implemented, a deployment of these movable portions (10),**characterized in that** it includes a means (44) which in the case of the implementation of the mechanical control (40), prevents the disengagement of the first control.

2. The control device for a thrust reverser according to claim 1, **characterized in that** the means preventing the disengagement (44) directly blocks the movement of an operating lever (24) of the first control.

3. The control device for a thrust reverser according to claim 2, **characterized in that** the operating lever (24) performing a pivoting, the means (44) comes into the pivoting plane of this lever.

4. The control device for a thrust reverser according to any one of the preceding claims, **characterized in that** the mechanical blocking control includes the clamping of a tip of a rod (40) in a corresponding shape.

5. The control device for a thrust reverser according to claim 4, **characterized in that** the absence of the tip (40) of the corresponding shape, releases a space allowing a tab (48) to be displaced, this tab preventing the disengagement of the first control.

6. The control device for a thrust reverser according to claim 5, **characterized in that** the tip (40) has a cylindrical shape clamped between two supports (34, 38), the shape of one of these supports (34) having an opening allowing the tab (48) to enter therein when this tip is removed.

7. The control device for a thrust reverser according to claim 5 or 6, **characterized in that** the tab (48) is located at one end of a pivoting blocking blade (44), the other end of this blade comprising a means directly preventing the movement of the operating lever (24) of the first blocking control.

8. The control device for a thrust reverser according to any one of the preceding claims, **characterized in that** it includes a second means (50) which prevents the implementation of the mechanical control (40) before the implementation of the first control.

9. The control device for a thrust reverser according to claim 8, **characterized in that** the first blocking control includes an operating lever (24) comprising a finger (50) constituting the second means, which faces a movable support (38) maintaining the mechanical control (40) disengaged.

10. A turbojet engine nacelle including a thrust reverser having movable portions (10) motorized by actuators (12), which are deployed in order to reverse the thrust, and a control device comprising a first blocking control (24) acting on the motorized system as well as a second blocking control (40) mechanically acting on the movable members, **characterized in that** this control device is made according to any one of the preceding claims.
